# EUROPEAN PATENT APPLICATION

(11) **EP 4 708 801 A1**
(43) Date of publication of application: **11.03.2026**
(21) Application number: 24809960.8
(22) Date of filing: 01.02.2024
(51) Int. Cl.: H04L 41/0895, H04L 41/40

(54) **DEPLOYMENT METHOD AND DEPLOYMENT APPARATUS FOR VIRTUAL NETWORK FUNCTION**

(30) Priority: 19.05.2023 CN 202310576405
(71) Applicant: Huawei Technologies Co., Ltd., Shenzhen, Guangdong 518129 (CN)
(72) Inventor: ZHANG, Hao, Shenzhen, Guangdong 518129 (CN); XIA, Hai, Shenzhen, Guangdong 518129 (CN)
(74) Representative: Maiwald GmbH
(86) International application number: PCT/CN2024/075147
(87) International publication number: WO 2024/239710

(57) **Abstract**

This application provides a virtual network function deployment method and deployment apparatus. According to the deployment method provided in this application, when resources are allocated to VDUs required by a to-be-deployed VNF, all of the required VDUs are used as an entire group, to compute, in one computation periodicity at a granularity of a group, resources required for scheduling all the VDUs, until the corresponding resources are obtained for scheduling the entire group of VDUs or scheduling of the entire group of VDUs fails. When deployment locations of the VDUs for the to-be-deployed VNF are computed at the granularity of a group, an allocation manner that is not conducive to overall deployment is recomputed and adjusted, so that a success rate of VNF deployment is improved.

## Description

This application claims priority to Chinese Patent Application No. 202310576405.9, filed with the China National Intellectual Property Administration on May 19, 2023 and entitled "VIRTUAL NETWORK FUNCTION DEPLOYMENT METHOD AND DEPLOYMENT APPARATUS", which is incorporated herein by reference in its entirety.

### TECHNICAL FIELD

This application relates to the field of network functions virtualization technologies, and in particular, to a virtual network function deployment method and deployment apparatus.

### BACKGROUND

A network functions virtualization (network functions virtualization, NFV) technology may decouple upper-layer software from lower-layer universal hardware by virtualizing a computing resource, a storage resource, and a network resource, to flexibly deploy a software-defined network function onto a universal device such as a server, a switch, or a memory, thereby facilitating efficient and cost-effective network operation. In an NFV framework, a network function implemented by software is referred to as a virtual network function (virtual network function, VNF). To ensure normal running of the VNF and collaboration between different VNFs, a cloud operating system (operating system, OS) needs to schedule resources to deploy the VNF onto a universal hardware platform.

### SUMMARY

This application provides a virtual network function deployment method and deployment apparatus, to improve network deployment efficiency.

According to a first aspect, this application provides a virtual network function deployment method, applied to an infrastructure service manager, where the method includes: receiving first request information sent by a virtual network function manager VNFM, where the first request information is for requesting to deploy a virtual deployment unit VDU for a first virtual network function VNF; creating M VDUs for the first VNF, where the M VDUs are associated as VDUs in a same group, and M is a positive integer; and deploying the VDUs in the same group by using a group scheduling method, where the group scheduling method is allocating a resource to each of the VDUs in the same group in one computation periodicity, until each of the VDUs in the same group obtains the corresponding resource or allocation of resources to the entire group of the VDUs in the same group fails, and the computation periodicity is for computing the corresponding resource for each of the VDUs in the same group.

In the method, a plurality of VDUs as a whole are used as a granularity in the group scheduling method, unified scheduling computation is performed on resources required by the plurality of VDUs as a whole, to improve rationality of resource allocation, and improve a possibility of successful VDU deployment.

In a possible implementation, the first request information carries first information, the first information indicates that a workload group object identifier associated with the VDU required by the first VNF is a first workload group object identifier, the workload group object identifier indicates a workload group object, and the workload group object includes the following attribute information: a maximum quantity of VDUs that are associable with the workload group object identifier, a scheduling policy when the VDU associated with the workload group object identifier is deployed by using the group scheduling method, a scheduling priority when the VDU associated with the workload group object identifier is deployed by using the group scheduling method, and scheduling timeout duration when the VDU associated with the workload group object identifier is deployed by using the group scheduling method.

That the infrastructure service manager creates M VDUs for the first VNF includes: The infrastructure service manager creates the M VDUs, where each of the M VDUs is associated with the first workload group object identifier.

Deploying the M VDUs by using the group scheduling method includes: deploying, by using the group scheduling method based on the attribute information of the workload group object indicated by the first workload group object identifier, the VDU associated with the first workload group object identifier.

The workload group object is introduced as a custom resource. The workload group object is used as an entire group. The plurality of VDUs required by the to-be-deployed VNF are associated with the workload group object via labels, to become members of the workload group object. In addition, a plurality of attributes of the workload group object facilitate subsequent deployment performed by using the group scheduling method.

In some implementations, deploying, by using the group scheduling method based on the attribute information of the workload group object indicated by the first workload group object identifier, the VDU associated with the first workload group object identifier includes:
obtaining a VDU that is not deployed; when a workload group object identifier associated with the VDU that is not deployed is the first workload group object identifier, adding the VDU that is not deployed to an obtained scheduling queue associated with the first workload group object identifier; and deploying the VDU in the scheduling queue by using the group scheduling method based on the attribute information of the workload group object indicated by the first workload group object identifier.

Based on the workload group object identifier associated with the VDU that is not deployed, a common VDU and a VDU that needs to be deployed by using the group scheduling method may be added to different scheduling queues, to facilitate subsequent deployment of different VDUs.

In some implementations, deploying the VDU in the scheduling queue by using the group scheduling method based on the attribute information of the workload group object indicated by the first workload group object identifier includes:
when a quantity of VDUs in the scheduling queue is equal to the maximum quantity of the workload group object indicated by the first workload group object identifier, deploying, by using the group scheduling method, the VDU in the scheduling queue according to the scheduling policy and the scheduling priority of the workload group object indicated by the first workload group object identifier, until each VDU in the scheduling queue is successfully deployed or deployment duration exceeds the scheduling timeout duration of the workload group object indicated by the first workload group object identifier.

In this way, reaching a quantity of members of the workload group object is used as a dequeue rule of the scheduling queue, to ensure that VDUs in dequeue scheduling are associated with a same workload group object, and schedule the plurality of VDUs at a granularity of a group by using the group scheduling method.

In a possible implementation, the method further includes:
receiving second information from the VNFM, where the second information indicates to create a workload group object whose identifier is the first workload group object identifier.

In some implementations, the method further includes:
sending a workload group object list to the VNFM; and receiving the second information from the VNFM includes: when the workload group object list does not include the workload group object whose identifier is the first workload group object identifier, receiving the second information from the VNFM.

In some implementations, the method further includes:
receiving third information from the VNFM, where the third information indicates to update the attribute information of the workload group object whose identifier is the first workload group object identifier.

In some implementations, the method further includes:
sending the workload group object list to the VNFM; and receiving the third information from the VNFM includes: when the workload group object list includes the workload group object whose identifier is the first workload group object identifier, receiving the third information from the VNFM.

In some implementations, before sending the workload group object list to the VNFM, the method further includes:
receiving second request information from the VNFM, where the second request information is for requesting to query the workload group object list.

According to the virtual network function deployment method provided in this application, not only operations, such as adding, deleting, modifying, and querying, can be independently performed on the workload group object, but also group scheduling check can be implemented in a process of deploying the VDU.

In a possible implementation, deploying, by using the group scheduling method, the VDU in the scheduling queue based on the attribute information of the workload group object indicated by the first workload group object identifier includes:
associating a group scheduling label with a first node via a first scheduler, where the first node includes a candidate deployment node of the VDU in the scheduling queue, and the first scheduler is configured to allocate a resource to the VDU; and deploying the VDU in the scheduling queue via a second scheduler by using the group scheduling method based on the attribute information of the workload group object indicated by the first workload group object identifier, where the second scheduler is a copy of the first scheduler.

In some implementations, deploying the VDU in the scheduling queue by using the group scheduling method based on the attribute information of the workload group object indicated by the first workload group object identifier includes:
associating the group scheduling label with the first node via the first scheduler, where the first node includes the candidate deployment node of the VDU in the scheduling queue, and the first scheduler is configured to allocate the resource to the VDU; and deploying the VDU in the scheduling queue via at least one schedule solver by using the group scheduling method based on the attribute information of the workload group object indicated by the first workload group object identifier, where the schedule solver is an independent third-party scheduler.

Regardless of whether the group scheduling method is used via the second scheduler or the schedule solver, computing workload pressure can be alleviated.

According to a second aspect, this application provides a virtual network function deployment method, applied to a virtual network function manager VNFM, where the method includes:
receiving third request information, where the third request information is for triggering deployment of a virtual deployment unit VDU for a first virtual network function VNF; and sending first request information to an infrastructure service manager, where the first request information is for requesting to deploy the VDU for the first VNF.

In a possible implementation, the third request information and the first request information carry first information, the first information indicates that a workload group object identifier associated with the VDU required by the first VNF is a first workload group object identifier, the workload group object identifier indicates a workload group object, and the workload group object includes the following attribute information: a maximum quantity of VDUs that are associable with the workload group object identifier, a scheduling policy when the VDU associated with the workload group object identifier is deployed by using a group scheduling method, a scheduling priority when the VDU associated with the workload group object identifier is deployed by using the group scheduling method, and scheduling timeout duration when the VDU associated with the workload group object identifier is deployed by using the group scheduling method.

In a possible implementation, the method further includes:
sending second information to the infrastructure service manager, where the second information indicates to create a workload group object whose identifier is the first workload group object identifier.

In some implementations, the method further includes:
receiving a workload group object list from the infrastructure service manager; and the sending second information to the infrastructure service manager includes: when the workload group object list does not include the workload group object whose identifier is the first workload group object identifier, sending the second information to the infrastructure service manager.

In some implementations, the method further includes:
sending third information to the infrastructure service manager, where the third information indicates to update the attribute information of the workload group object whose identifier is the first workload group object identifier.

In some implementations, the method further includes:
receiving the workload group object list from the infrastructure service manager; and the sending third information to the infrastructure service manager includes: when the workload group object list includes the workload group object whose identifier is the first workload group object identifier, sending the third information to the infrastructure service manager.

In some implementations, before receiving the workload group object list from the infrastructure service manager, the method further includes:
sending second request information to the infrastructure service manager, where the second request information is for requesting to query the workload group object list.

In some implementations, the third request information is specifically for requesting to instantiate the first VNF; or the third request information is specifically for requesting to scale out the VDU for the first VNF.

Regardless of whether the third request information is for requesting to instantiate the first VNF or for requesting to perform scale-out for the first VNF, a scheduling resource needs to be allocated to the VDU required by the first VNF.

In some implementations, the request information received by the VNFM is entered by an administrator on the VNFM; or the request information received by the VNFM is received by the VNFM from an NFVO.

In an NFV system architecture, both an NFVO and a VNFM can manage a VNF.

According to a third aspect, this application provides a virtual network function deployment apparatus, where the virtual network function deployment apparatus includes a functional module configured to implement any one of deployment methods mentioned in the foregoing implementations. In some implementations, each module may be implemented via software and/or hardware.

According to a fourth aspect, this application provides a virtual network function deployment apparatus, including a processor and a memory that is in communication connection to the processor, where the memory stores computer-executable instructions. The processor executes the computer-executable instructions stored in the memory, to implement the virtual network function deployment method provided in the first aspect.

According to a fifth aspect, this application provides a virtual network function deployment apparatus, including a processor and a memory that is in communication connection to the processor, where the memory stores computer-executable instructions. The processor executes the computer-executable instructions stored in the memory, to implement the virtual network function deployment method provided in the second aspect.

According to a sixth aspect, this application provides a virtual network function deployment system. The system includes the apparatus in the fourth aspect and the apparatus in the fifth aspect.

According to a seventh aspect, this application provides a computer program product, including a computer program. When the computer program is executed by a processor, the method in the first aspect, the second aspect, or any one of possible implementations thereof is implemented.

According to an eighth aspect, this application provides a computer-readable medium. The computer-readable medium stores program code for execution by a device, and the program code includes the method in the first aspect, the second aspect, or any one of possible implementations thereof.

### BRIEF DESCRIPTION OF DRAWINGS

The accompanying drawings herein are incorporated into this specification and constitute a part of this specification to show embodiments that comply with this application, and are used together with this specification to explain the principle of this application.
FIG. 1 is a diagram of a standardized architecture of an NFV system proposed by the European Telecommunications Standard Institute;
FIG. 2 is a diagram of a concept of a workload group according to an embodiment of this application;
FIG. 3 is a schematic flowchart of a virtual network function deployment method according to an embodiment of this application;
FIG. 4 is a schematic flowchart of a virtual network function deployment method according to an embodiment of this application;
FIG. 5 is a schematic flowchart of adding, deleting, modifying, and querying a workload group object list according to an embodiment of this application;
FIG. 6 is a diagram of associating a VDU with a workload group object according to an embodiment of this application;
FIG. 7 is a diagram of an architecture of K8s components for extending group scheduling according to an embodiment of this application;
FIG. 8 is a schematic flowchart in which a K8s implements group scheduling according to an embodiment of this application;
FIG. 9 is a diagram of a framework in which a K8s is extended by a co-scheduler to support group scheduling computation according to an embodiment of this application;
FIG. 10 is a schematic flowchart in which a K8s implements group scheduling via a primary scheduler and a co-scheduler according to an embodiment of this application;
FIG. 11 is a diagram of a framework in which a K8s is extended by a schedule solver to support group scheduling computation according to an embodiment of this application;
FIG. 12 is a schematic flowchart in which a K8s implements group scheduling via a primary scheduler and a schedule solver according to an embodiment of this application;
FIG. 13 is a diagram of a structure of a virtual network function deployment apparatus according to an embodiment of this application;
FIG. 14 is a diagram of a structure of a virtual network function deployment apparatus according to another embodiment of this application; and
FIG. 15 is a diagram of a structure of a virtual network function deployment apparatus according to still another embodiment of this application.

Specific embodiments of this application are shown by using the foregoing accompanying drawings, and are described in more detail hereinafter. The accompanying drawings and text descriptions are not intended to limit the scope of the idea of this application in any manner, but are intended to describe the concept of this application for a person skilled in the art with reference to specific embodiments.

### DESCRIPTION OF EMBODIMENTS

Example embodiments are described in detail herein, and examples of the example embodiments are presented in accompanying drawings. When the following descriptions relate to the accompanying drawings, unless otherwise indicated, same numbers in different accompanying drawings indicate a same or similar element. Implementations described in the following example embodiments do not represent all implementations consistent with this application. On the contrary, the implementations are merely examples of apparatuses and methods that are described in the appended claims in detail and that are consistent with some aspects of this application.

In this application, "at least one" means one or more, and "a plurality of" means two or more. "And/or" describes an association relationship between associated objects, and indicates that three relationships may exist. For example, A and/or B may indicate the following cases: Only A exists, both A and B exist, and only B exists, where A and B may be singular or plural. In the text descriptions of this application, the character "/" generally indicates an "or" relationship between the associated objects. A conventional telecommunication network system includes various specialized hardware devices, and different dedicated hardware devices run corresponding functions. With growth of a network scale, the telecommunication network system becomes more complex and extendability decreases accordingly. In an NFV technology, a software function of a device is separated from underlying hardware via a virtualization technology, to decouple software and hardware of a telecommunication network function node. The NFV technology is a core technology of carrier-class service cloudification. Based on the NFV technology, VNFs with different functions may be deployed on a universal hardware platform, to reduce costs of the telecommunication network system and provide better extendability.

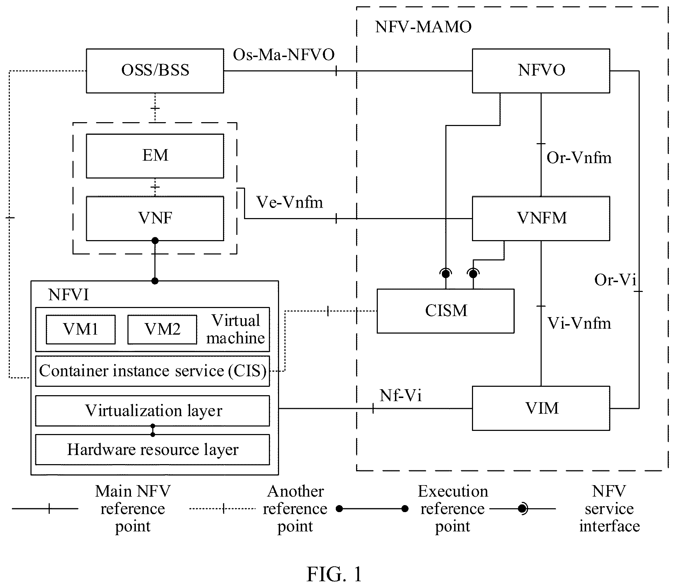

Different vendors may develop the VNFs with different functions. A service provider can flexibly select the VNF based on a requirement of the service provider and combine different VNFs for use. To ensure that all selected VNFs can operate and cooperate properly and run on the universal hardware platform, a standardized architecture is required for constraint during VNF development. FIG. 1 is a diagram of a standardized architecture of an NFV system proposed by the European Telecommunications Standards Institute (European telecommunications standards institute, ETSI). As shown in FIG. 1, the NFV system includes an NFV management and orchestration (NFV management and orchestration, NFV-MAMO) module, an NFV infrastructure (network functions virtualization infrastructure, NFVI), a VNF, an element management (element management, EM) module, and an operation support system/business support system (operation support system/business support system, OSS/BSS).

The NFV-MAMO module includes four functional modules: an NFV orchestrator (NFV orchestrator, NFVO), a VNF manager (VNF manager, VNFM), a container infrastructure service manager (container infrastructure service manager, CISM), and a virtualized infrastructure manager (virtualized infrastructure manager, VIM).

The NFVO has a global view function of a virtual resource, and is mainly responsible for managing a life cycle of a virtualized service, and allocating and scheduling virtual resources in a virtualized infrastructure and the NFVI. In addition, the NFVO may further execute a resource-related request from the VNFM, send configuration information to the VNFM, and collect status information of the VNF.

The VNFM is mainly responsible for managing life cycles of one or more VNFs. Through communication with the VNF, the VNFM may perform operations such as instantiation, update, query, autoscaling, and stopping on the VNF. There may be a plurality of VNFMs in the NFV system, and the VNFMs are respectively responsible for managing life cycles of different types of VNFs.

The VIM may perform a resource management function, such as manage allocation, resource discovery, and fault processing of an infrastructure resource. The VIM and the VNFM may communicate with each other to allocate the resource and exchange configuration and status information of a virtualized hardware resource. A function of the CISM is similar to that of the VIM, and the CISM mainly manages a resource for a container object. Both the VIM and the CISM are infrastructure service managers.

The NFVI is mainly configured to provide a hardware resource for the VNF at an upper layer. An underlying physical hardware resource in the NFVI is abstracted and converted into a virtualized hardware resource such as a virtual machine (virtual machine, VM) or a container through a virtualization layer. The upper-layer VNF runs in a virtualized resource environment, so that software and hardware are completely decoupled.

The EM module performs conventional fault, user, configuration, performance, and security management functions for the VNF.

The OSS/BSS supports various end-to-end telecommunication services. The OSS supports management functions such as network configuration, service provisioning, and fault management. The BSS supports product management, order management, revenue management, and customer management.

In the NFV architecture, comprehensive virtualization of a computing resource, a storage resource, and a network resource can be implemented by using a cloud OS, and virtualized physical hardware resources can be managed, monitored, and optimized in a unified manner.

As a core technology for implementing cloud computing, the NFV technology introduces three levels of services for implementing the carrier-class service cloudification: an infrastructure as a service (infrastructure as a service, IaaS), a platform as a service (platform as a service, PaaS), and software as a service (software as a service, SaaS).

The IaaS focuses on providing a basic resource for a user, and is usually provided in a form of a VM in an actual application. Therefore, when network functions virtualization is implemented in an IaaS architecture, in a corresponding virtual machine scenario, one or more VMs are invoked to deploy a VNF with a corresponding function.

The PaaS is a business model exhibiting a server platform as a service, to exhibit an interface service in a PaaS architecture. Other service developers may develop a service or an application by using such service interface capabilities.

A container as a service (container as a service, CaaS) exhibits a service in a form of a container, and may be considered as a specific type of a PaaS service. As an operating system-level virtualization technology, the container isolates different processes via an operating system isolation technology, such as CGroup and Namespace in Linux. Inside the container, there is no operating system, but there is only processes. Therefore, the container is more lightweight than a VM. In addition, the container can be deployed not only on a bare metal server, but also on a virtual machine. A container-based system deployed based on a bare metal server is referred to as a container running on the bare metal server, and a container-based system deployed based on a virtual machine is referred to as a container running on the virtual machine. When network functions virtualization is implemented in a CaaS architecture, in a corresponding container scenario, one or more containers are invoked to deploy a VNF with a corresponding function.

In the CaaS architecture, currently, a Kubernetes (K8s) container cluster management system based on an open-source platform is widely used in the field of container management and orchestration. The K8s can provide a whole set of functions such as resource scheduling, deployment and running, service discovery, and scaling for a container-based application. In essence, the K8s may be considered as a mini-CaaS manager based on a container technology.

It may be learned from the foregoing different scenarios that, one or more virtual deployment units (virtual deployment units, VDUs) at a smaller granularity are required for deploying the VNF. In the virtual machine scenario, a VDU object refers to a VM. In the container scenario, the K8s manages the container by using a minimum deployment unit "Pod". Each "Pod" contains one or more closely associated containers. Therefore, the VDU object refers to a "Pod". When the CISM/VIM schedules resources to deploy the VNF, the resources are actually allocated to VDUs included in the to-be-deployed VNF. Only when all the VDUs of the to-be-deployed VNF are bound to corresponding resource nodes, it can be determined that the corresponding VNF is successfully deployed.

In a conventional technology, a CISM/VIM scheduler computes a deployment location at a granularity of a single VDU. When hardware resources are limited but a VNF deployment requirement is to be met, after a part of the VDUs are first deployed at corresponding hardware locations, remaining VDUs may fail to be deployed due to insufficient remaining resources. Consequently, VNF deployment fails. For example,
in a container scenario, a virtual deployment unit VDU corresponds to a "Pod". Currently, the "Pod" required by a to-be-deployed VNF includes one A-Pod {Cpu(6v)/Mem(40G)}, one B-Pod{Cpu(2v)/Mem(20G)}, one C-Pod{Cpu(4v)/Mem(40G)}, and one D-Pod {Cpu(4v)/Mem(30G)}. Currently, available resources include boards in a subrack 0 and a slot 0: numa0{FreeCpu(8v)/Mem(100G)} and numal {FreeCpu(8v)/Mem(100G)}. The CISM computes a deployment location for each Pod based on a dequeue sequence of B, C, D, and A, and obtains, through computation, that the B-Pod and the C-Pod are deployed on the numa0, and the D-Pod is deployed on the numa1. When the CISM computes the deployment location for the A-Pod, because remaining resources on the numa0 and the numa1 do not meet a requirement of the A-Pod, allocation of the resources to the A-Pod fails. In the conventional technology, resource computation is performed at a granularity of a single "pod". Therefore, when A-Pod deployment fails, the CISM can only repeatedly compute the deployment location of the A-Pod in a deployment time limit until timeout occurs. Consequently, VNF deployment fails.

In addition, when a deployment location is computed at a granularity of a single VDU. When a plurality of VNFs share a host aggregate (host aggregate, HA) resource pool, a resource requirement specification of a VDU in a VNF is discrete, and remaining resources of a plurality of boards in an HA are insufficient for deploying another VDU. Consequently, a large quantity of resource fragments cannot be used.

To resolve the foregoing problem, this application provides a virtual network function deployment method, to improve network deployment efficiency.

A technical idea of this application is as follows: When resources are allocated to VDUs required by a to-be-deployed VNF, all the required VDUs are associated as an entire group, to compute, in a computation periodicity at a granularity of a group, resources required for scheduling all the VDUs. When scheduling of any one of the VDUs fails, an allocable resource is recomputed for a VDU to which a resource is successfully allocated and that is in the group, until the corresponding resources are obtained for scheduling the entire group of VDUs or scheduling of the entire group of VDUs fails.

When deployment locations of the VDUs for the to-be-deployed VNF are computed at the granularity of a group, an allocation manner that is not conducive to overall deployment is recomputed and adjusted, so that a success rate of VNF deployment is improved.

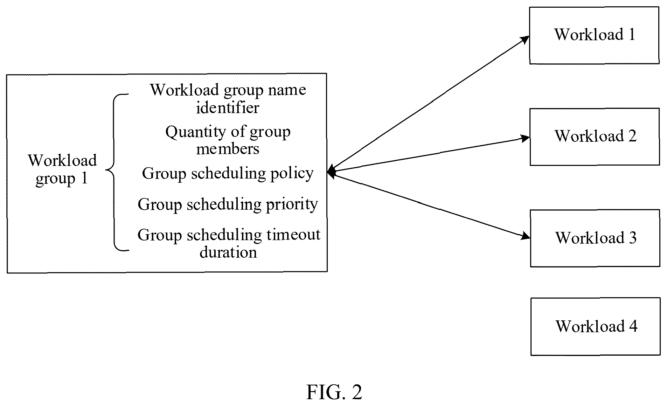

FIG. 2 is a diagram of a concept of a workload group according to an embodiment of this application. The concept of the workload group (Workload Group) is introduced in this application, to assist an infrastructure service manager in performing group scheduling on a VDU required by a to-be-deployed VNF. For the infrastructure service manager, the workload group is a custom resource, and a workload group object is an instantiation of this type of resource. As shown in FIG. 2, a workload group 1 (Workload Group 1) is a workload group object, and the workload group object has a series of attributes, including: a workload group name identifier, a quantity of group members, a group scheduling policy, a group scheduling priority, and group scheduling timeout duration.

Three VDUs, namely, a workload 1 (workload 1), a workload 2 (workload 2), and a workload 3 (workload 3), are used as VDUs required by the to-be-deployed VNF, and are associated with the name identifier of the workload group 1 via a label, to become group members of the workload group 1. A workload 4 (workload 4) is used as a common VDU workload for comparison. The group scheduling policy is used as a scheduling policy used when a CISM/VIM deploys the group members, namely, the workload 1 to the workload 3 in the workload group 1. Based on a resource requirement, the group scheduling policy may be classified into a minimum quantity of boards for use (Least Host), distributed scheduling (Least Allocate), centralized scheduling (Most Allocate), and the like. The group scheduling priority is for distinguishing scheduling priorities of different workload group objects. A smaller value of the group scheduling priority indicates a higher priority. It should be noted that, a priority of a VDU is manually set, and group members in a same workload group object have a same priority. The group scheduling timeout duration is used as a time limit for the CISM/VIM to allocate resources to the workload 1 to the workload 3. If any one of the VDUs (the workload 1 to the workload 3) does not obtain the required scheduling resource in the group scheduling timeout duration, it is considered that deployment fails.

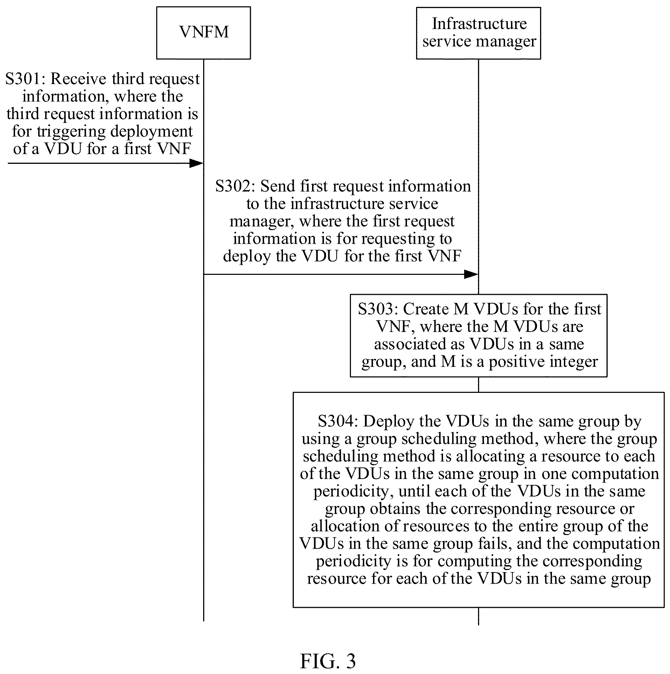

FIG. 3 is an example interaction flowchart of a virtual network function deployment method according to an embodiment of this application. The method may be applied to the system shown in FIG. 1. With reference to FIG. 3, the following describes in detail application of the deployment method in the NFV system shown in FIG. 1. An infrastructure service manager in this embodiment of this application may be a CISM or a VIM.

S301: A VNFM receives third request information, where the third request information is for triggering deployment of a virtual deployment unit VDU for a first virtual network function VNF.

In this step, the third request information is for triggering deployment of the VDU for the first VNF. In an example, the third request information is instantiation request information of the first VNF. The VNFM is used as a management module of the VNF. An administrator may trigger an instantiation request of the first VNF on a deployment interface of the VNFM, and send the third request information to the VNFM.

It should be noted that, before the instantiation request is triggered on the deployment interface of the VNFM, a deployment software package of the first VNF and a virtual network function module descriptor (VNF descriptor, VNFD) need to be uploaded. The deployment software package includes a software image used for running the VNF, and the software image is delivered to the infrastructure service manager. The VNFD is a description template used for deploying the VNF, and the VNFM may extract, from the VNFD, an input parameter required for deploying the first VNF. The deployment software package and the VNFD template may be uploaded through a VNF portal.

In some implementations, the third request information further carries first information, and the first information indicates that a workload group object identifier associated with the VDU required by the first VNF is a first workload group object identifier. Therefore, the VDU required by the first VNF becomes a group member of the first workload group object. It may be understood that, the workload group object identifier is a workload group name identifier in a workload group object attribute, and each piece of attribute information of the first workload group object is for assisting the infrastructure service manager in performing group scheduling on the VDU required by the first VNF.

It should be noted that, the workload group object identifier that is associated with the VDU required by the first VNF and that is indicated by the first information and the attribute information included in the first workload group object are obtained based on the VNFD. In other words, when a concept of the workload group is introduced to assist the CISM/VIM in performing group scheduling on the VDU required by the to-be-deployed VNF, the VNFD template further needs to include a group scheduling label of the VDU required by the to-be-deployed VNF and an attribute parameter of the associated workload group object. After obtaining the foregoing information based on the VNFD, the administrator may further modify the information as required.

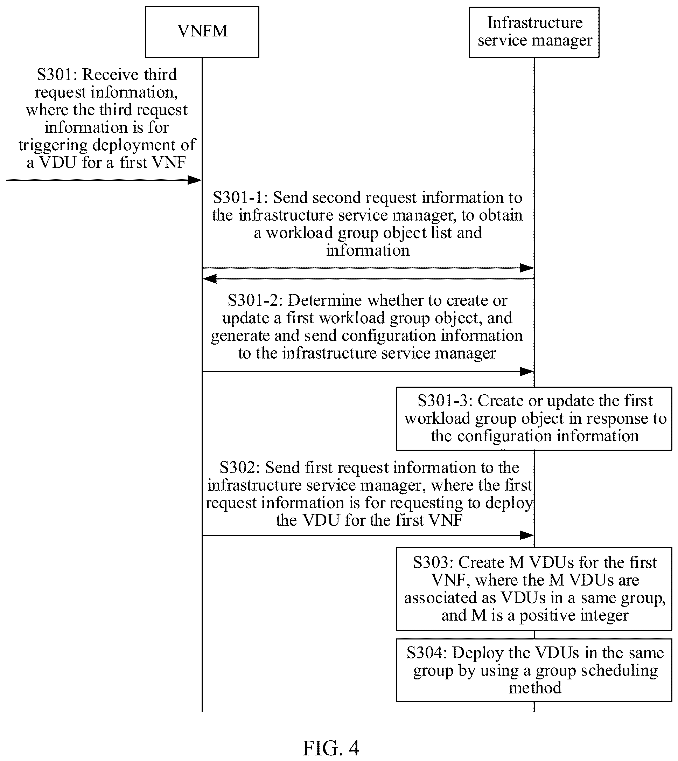

In this embodiment, when the VDU associated with the workload group object is deployed based on the attribute information of the workload group object, as shown in FIG. 4, the method further includes S301-1, S301-2, and S301-3.

S301-1: The VNFM sends second request information to the infrastructure service manager, to obtain a workload group object list and information.

The infrastructure service manager provides an interface for adding, deleting, modifying, and querying a workload group object for the VNFM. The VNFM sends the second request information to the infrastructure service manager, and may query an identifier and attribute information of a workload group object included in the workload group object list.

S301-2: The VNFM determines whether to create a first workload group object or update the first workload group object, and generates and sends configuration information to the infrastructure service manager.

In this step, the VNFM may query, based on the first information, whether the workload group object list includes the workload group object whose identifier is the first workload group object identifier.

If the workload group object list does not include the workload group object whose identifier is the first workload group object identifier, the VNFM determines that the first workload group object needs to be created. Correspondingly, the VNFM generates second information, where the second information indicates to create the workload group object whose identifier is the first workload group object.

If the workload group object list includes the workload group object whose identifier is the first workload group object identifier, the workload group object is denoted as an initial first workload group object, and the VNFM further determines whether attribute information of the initial first workload group object is the same as the attribute information that is of the first workload group object and that is indicated by the first information. If the attribute information of the initial first workload group object is different from the attribute information that is of the first workload group object and that is indicated by the first information, the VNFM determines that the attribute information of the initial first workload group object in the workload group object list needs to be updated. Correspondingly, the VNFM generates third information, where the third information indicates to update the attribute information of the workload group object whose identifier is the first workload group object identifier.

The second information or the third information indicates the configuration information required by the first workload group object, and the VNFM sends the configuration information to the infrastructure service manager.

S301-3: The infrastructure service manager creates or updates the first workload group object in response to the configuration information.

The second information or the third information includes the identifier and the attribute information of the first workload group object. Based on the configuration information, the infrastructure service manager creates the first workload group object, or updates the attribute information of the initial first workload group object in the workload group object list to be consistent with the attribute information that is of the first workload group object and that is included in the configuration information.

It may be understood that, the foregoing three steps S301-1, S301-2, and S301-3 function as group scheduling check, and the function of the three steps is to avoid a conflict between the identifier that is of the first workload group object and that is indicated by the first information and other attribute information and information of an existing workload group object in the workload group object list, to avoid a deployment failure of the first VNF caused by the conflict. The three steps are optional steps in a deployment process of the first VNF.

S302: The VNFM sends first request information to the infrastructure service manager, where the first request information is for requesting to deploy the VDU for the first VNF.

In this step, the first request information is for requesting the infrastructure service manager to create the VDU for the first VNF. A quantity of VDU instances required by the first VNF is determined based on the third request information. Therefore, the first request information is generated based on the third request information.

In a possible implementation, when the third request information carries the first information that indicates the workload group object identifier associated with the VDU required by the first VNF, to transfer content indicated in the first information to the infrastructure service manager, the first request information also carries the first information.

S303: The infrastructure service manager creates M VDUs for the first VNF, where the M VDUs are associated as VDUs in a same group, and M is a positive integer.

It may be learned, based on the first request information, that the M VDUs are required for deploying the first VNF, the infrastructure service manager creates the M VDUs required by the first VNF, and the M VDUs are associated as the VDUs in the same group.

In a possible implementation, when the first request information carries the first information, the M VDUs created by the infrastructure service manager are further associated with the first workload group object identifier via the label. In this case, the M VDUs become group members of the first workload group object.

S304: The infrastructure service manager deploys the VDUs in the same group by using a group scheduling method, where the group scheduling method is allocating a resource to each of the VDUs in the same group in one computation periodicity, until each of the VDUs in the same group obtains the corresponding resource or allocation of resources to the entire group of the VDUs in the same group fails, and the computation periodicity is for computing the corresponding resource for each of the VDUs in the same group.

When the M VDUs are associated as the VDUs in the same group, the infrastructure service manager may compute corresponding deployment locations for all group members by using the group scheduling method. If any one of the group members does not have a corresponding mapping location in a schedulable resource in computation, backtracking is performed on a group member VDU whose corresponding mapping location is obtained, to adjust schedulable resources, until the corresponding mapping location is obtained for each of the M VDUs through computation or computation duration exceeds one computation periodicity. When the computation duration exceeds the computation periodicity, scheduling of the entire group of VDUs fails. After the M VDUs all obtains the corresponding scheduling locations, the infrastructure service manager binds each of the VDUs to a corresponding resource node. In this case, this is equivalent to successful deployment of the first VNF.

In this embodiment, the VNF is deployed by using the group scheduling method, and an allocation manner that is not conducive to overall deployment is recomputed and adjusted, so that a success rate of VNF deployment is improved. In addition, the concept of the workload group is introduced. Through computation before binding, unnecessary operations in the deployment process are reduced, and VNF deployment efficiency is improved.

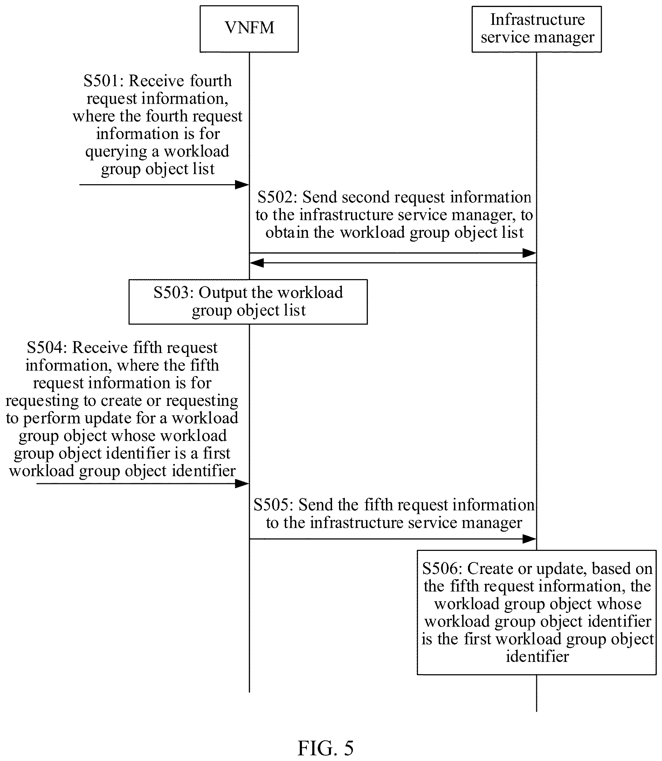

According to the foregoing embodiment, in a VNF instantiation process, the group scheduling check function is implemented via the VNFM. In some implementations, the workload group object may alternatively be manually managed by the VNFM before instantiation. With reference to the embodiment in FIG. 5, the following describes a method for manually managing a workload group object. As shown in FIG. 5, in the VNF deployment method provided in this embodiment of this application, deployment planning of the workload group object may be further implemented before instantiation. The method specifically includes the following steps.

S501: A VNFM receives fourth request information, where the fourth request information is for querying a workload group object list.

Before VNF instantiation, a status of an existing workload group object in the workload group object list may be queried via the VNFM, to facilitate planning in advance based on a deployment requirement of a to-be-deployed VNF.

S502: The VNFM sends second request information to an infrastructure service manager, to obtain the workload group object list.

As an instantiation of a custom resource, the workload group object is also a resource in essence, and may be managed by the infrastructure service manager. The second request information is for obtaining the workload group object list from the infrastructure service manager.

S503: The VNFM outputs the workload group object list.

The VNFM feeds back the obtained workload group object list to a querier, and the querier determines, based on the deployment requirement of the to-be-deployed VNF, to create a new workload group object or update attribute information of the existing workload group object in the workload group object list.

In this embodiment, attribute information of a first workload group object is required for deploying a first VNF. In this case, it is queried whether the workload group object list includes a workload group object whose identifier is an identifier of the first workload group object.

If the workload group object list does not include the workload group object whose identifier is the first workload group object identifier, it is determined that a first workload group object needs to be created.

If the workload group object list includes the workload group object whose identifier is the first workload group object identifier, the workload group object is denoted as an initial first workload group object. If attribute information of the initial first workload group object is inconsistent with the attribute information of the first workload group object required for deploying the first VNF, it is determined that the attribute information of the initial first workload group object in the workload group object list needs to be updated.

S504: The VNFM receives fifth request information, where the fifth request information is for requesting to create or requesting to perform update for the workload group object whose workload group object identifier is the first workload group object identifier.

In this step, the querier sends the fifth request information to the VNFM based on a determining result in S503. When the determining result is that the first workload group object needs to be created, the fifth request information is for requesting to create the workload group object whose workload group object identifier is the first workload group object identifier. When the determining result is that the attribute information of the workload group object in the workload group object list needs to be updated, the fifth request information is for requesting to perform update for the workload group object whose workload group object identifier is the first workload group object identifier.

Based on the determining result, the fifth request information carries second information or third information, and the second information or the third information includes attribute information that should be included in the workload group object whose workload group object identifier is the first workload group object identifier or to which the attribute information of the workload group object whose workload group object identifier is the first workload group object identifier should be updated.

S505: The VNFM sends the fifth request information to the infrastructure service manager.

The infrastructure service manager provides an interface for adding, deleting, modifying, and querying the workload group object for the VNFM.

S506: The infrastructure service manager creates or updates, based on the fifth request information, the workload group object whose workload group object identifier is the first workload group object identifier.

If the fifth request information carries the second information, the infrastructure service manager creates the first workload group object. If the fifth request information carries the third information, the infrastructure service manager updates the attribute information of the initial first workload group object in the workload group object list to be consistent with the attribute information that is of the first workload group object and that is included in the third information.

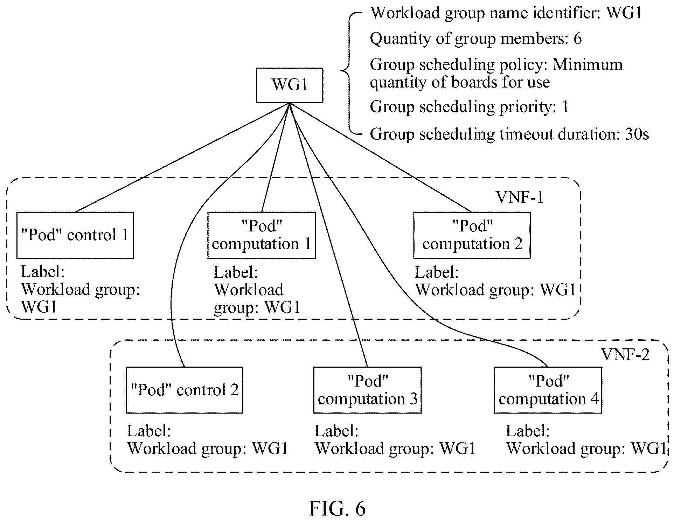

In the foregoing steps, the deployment planning is mainly performed based on the deployment requirement of the first VNF. For a co-deployment requirement of a plurality of VNFs, a workload group object may also be manually managed by the VNFM. For example,
as shown in FIG. 6, a to-be-deployed VNF-1 includes three "Pods": a "Pod" control 1, a "Pod" computation 1, and a "Pod" computation 2; a to-be-deployed VNF-2 includes three "Pods", namely, a "Pod" control 2, a "Pod" computation 3, and a "Pod" computation 4. The VNF-1 and the VNF-2 need to be co-deployed. A workload group object WG1 is defined based on a requirement that the VNF-1 and the VNF-2 expect compact deployment. Attribute information of the WG1 is as follows: a workload group name identifier: WG1; a quantity of group members: 6; a group scheduling policy: a minimum quantity of boards for use; a group scheduling priority: 1; and group scheduling timeout duration: 30s. Each of the "Pods" in the VNF-1 and the VNF-2 is associated with the name identifier of the WG1 via a label.

A workload group object list is queried, and there is no workload group object whose name identifier is WG1. Therefore, it is determined that the WG1 object needs to be created. Fifth request information and carried second information are configured based on an attribute parameter of the defined WG1 object, and an infrastructure service manager creates the WG1 object based on the fifth request information.

In this embodiment, the workload group object is manually managed by the VNFM, so that the workload group object can be added, deleted, modified, and queried, and a conflict between the attribute of the workload group object associated with the VDU required by the to-be-deployed VNF and the existing workload group object in the workload group object list can be avoided.

In this application, the infrastructure service manager allocates, by using the group scheduling method, resources to M VDUs associated with the first workload group object. For the infrastructure service manager, a workload group is a brand new custom resource. Therefore, a VDU associated with a workload group object and a common workload VDU need to be distinguished first. The following uses a bare metal container scenario as an example to describe a method for scheduling a VDU associated as a workload group object member via a workload group name identifier.

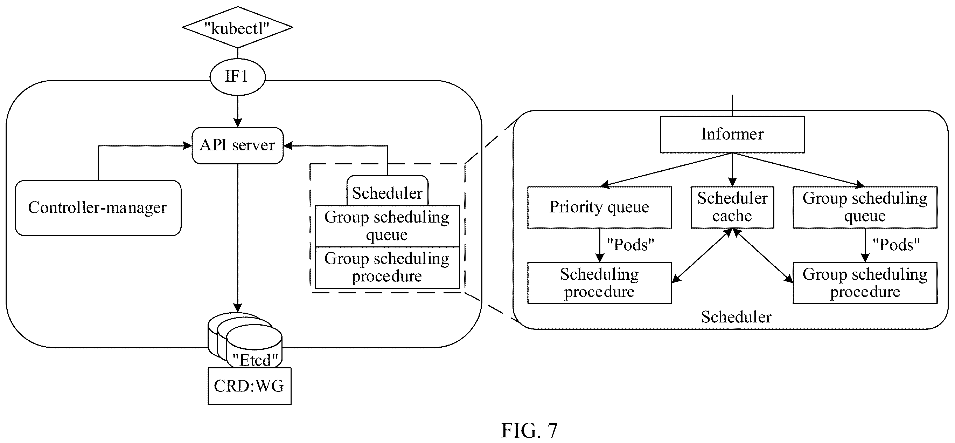

FIG. 7 is a diagram of an architecture of K8s components for extending group scheduling according to an embodiment of this application. As shown in FIG. 7, "kubectl" is used as a command line tool to control and manage a K8s cluster. IF1 is an extended interface, and provides operations such as adding, deleting, modifying, and querying a workload group object. Custom resource definition (custom resource definition, CRD) is a built-in resource type of a K8s. A custom resource, for example, a workload group WG may be converted into the resource type on the K8s via a CRD resource. The K8s mainly includes four components: an API server (API Server), a controller-manager (Controller-Manager), an "Etcd", and a scheduler (Scheduler).

The API server is a unified access entry for all resources in the K8s cluster, and exists as a core hub for data exchange between components in the cluster. The controller-manager is a core component for the K8s to automatically manage various resources, and a change of various statuses in the cluster may be monitored in real time through automatic management. The "Etcd" is responsible for storing information about various resource objects and status data in the cluster. The scheduler is responsible for scheduling a resource in the cluster and scheduling a "Pod" to a proper node (Node).

Based on an original priority queue (Priority Queue), a scheduling procedure (Schedule one), and a scheduler cache (Cache), the K8s scheduler extends a group scheduling queue (Group Priority Queue) and a group scheduling procedure (Schedule Group). The group scheduling queue is for storing a to-be-scheduled workload group member, and the group scheduling procedure provides a group scheduling algorithm to complete group scheduling computation for a workload group member that dequeues. It may be understood that, the group scheduling queue and the group scheduling procedure may distinguish between a VDU associated with the workload group object and a common workload VDU, to ensure that there is no conflict between the common workload VDU and the VDU associated with the workload group object in a scheduling process.

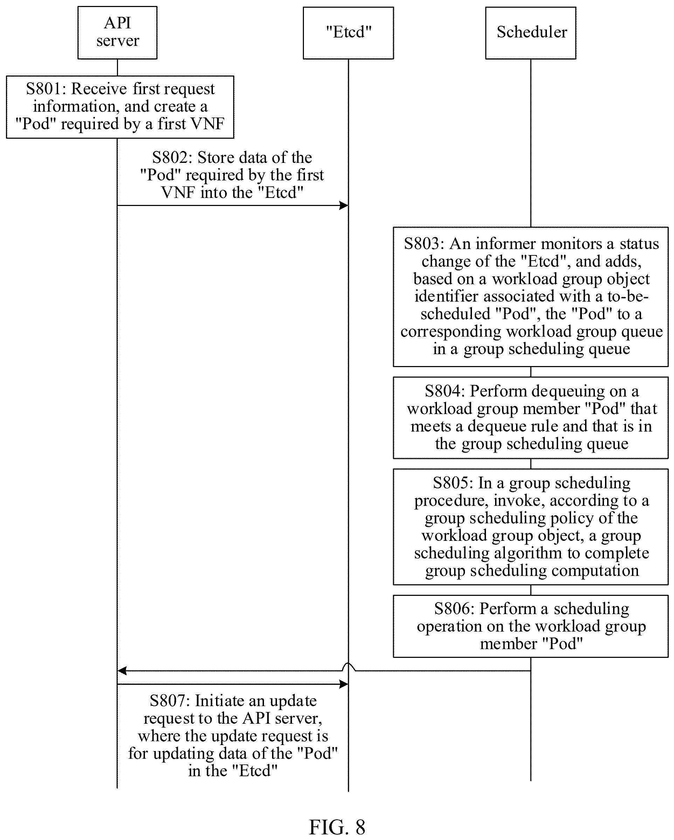

In essence, the K8s may be considered as a mini-CaaS manager. Therefore, the K8s can be used as an example of an infrastructure service manager. FIG. 8 is a schematic flowchart in which a K8s implements group scheduling according to an embodiment of this application. As shown in FIG. 8, a group scheduling procedure may include S801 to S807.

S801: An API server receives first request information, and creates a "Pod" required by a first VNF.

In this step, the first request information is for requesting to deploy the "Pod" for the first VNF. It may be learned, based on the first request information, that M "Pods" are required for deploying the first VNF. The first request information carries first information, the first information indicates that a workload group object identifier associated with the "Pod" required by the first VNF is a first workload group object identifier WG1. The M "Pods" whose associated workload group object identifier is the first workload group object identifier WG1 are created via a reset interface (REST API) of the API server.

S802: The API server stores data of the "Pod" required by the first VNF into an "Eted".

Because the "Etcd" is equivalent to a database of the K8s, the API server stores data of the created M "Pods" into the "Etcd".

It may be understood that, step S801 and step S802 are actually equivalent to step S303 in the embodiment shown in FIG. 3, and the K8s creates M VDUs via the API server and the "Etcd".

It should be noted that, if a workload group object list does not include a workload group object whose identifier is the first workload group object identifier WG1, a first workload group object WG1 may also be created via the API server and the "Etcd", and a workload group queue WG1 corresponding to the first workload group object WG1 is created in a group scheduling queue.

S803: An informer (Informer) in a scheduler monitors a status change of the "Etcd", and adds, based on a workload group object identifier associated with a to-be-scheduled "Pod", the "Pod" to a corresponding workload group queue in the group scheduling queue.

The informer in the scheduler listens and detects, in a "list-watch" mechanism, the newly added unscheduled "Pod" in the "Eted". Because there is the workload group queue WG1 corresponding to the first workload group object WG1 in the group scheduling queue, the scheduler adds a "Pod" whose associated workload group object identifier is WG1 to the workload group queue WG1. If the "Pod" is not associated with a workload group object, the scheduler adds the "Pod" to a priority queue. The API server is used as a hub for data interaction between components in a K8s framework. Therefore, when the informer monitors the status change of the "Etcd", it is necessary to implement forwarding via the API server.

It should be noted that, a workload group is used as a custom resource, and information about the workload group object is stored in the "Etcd". Before group scheduling starts, the scheduler listens and detects a resource change in the "Etcd" via the informer, and creates a corresponding workload group queue in the group scheduling queue for each workload group object in the workload group object list.

In addition, in some implementations, the informer in the scheduler is further responsible for updating a scheduler cache, and the scheduler cache caches information about the to-be-scheduled "Pod" and a resource node in the "Etcd".

S804: Perform dequeuing on a workload group member "Pod" that meets a dequeue rule and that is in the group scheduling queue.

To implement group scheduling computation for the workload group member "Pod", only when the workload group member "Pod" in the group scheduling queue meets the dequeue rule, dequeuing and a subsequent group scheduling operation may be performed.

In an example, the dequeue rule is as follows:
(1) Check a length of each workload group queue in the group scheduling queue. When the length of the workload group queue is greater than or equal to a maximum quantity of group members in a workload group, refer to Rule (2). The length of the workload group queue indicates a quantity of "Pods" in the workload group queue.
(2) Check a group scheduling priority of a workload group object associated with each workload group queue. A workload group queue with a smallest value has a highest scheduling priority and earliest dequeuing is performed on the workload group queue. If there are workload group queues with a same scheduling priority, refer to Rule (3).
(3) Check creation time of a workload group queue that meets a condition of Rule (2). Compare creation time of the workload group queues with the same group scheduling priority. Earliest dequeuing is performed on an earliest created workload group queue.

S805: In a group scheduling procedure in the scheduler, a group scheduling algorithm is invoked according to a group scheduling policy of the workload group object on which dequeuing is performed, to complete group scheduling computation.

In the group scheduling procedure, a group scheduling algorithm is provided. A group scheduling policy in an attribute of the workload group object WG1 on which dequeuing is performed is in one-to-one correspondence with a group scheduling algorithm. In the group scheduling procedure, the corresponding group scheduling algorithm is invoked according to the group scheduling policy of the workload group object on which dequeuing is performed, to compute nodes to which the M "Pods" in the workload group queue on which dequeuing is performed are to be scheduled.

In this step, group scheduling computation is not completed until each of the "Pods" in the workload group queue on which dequeuing is performed obtains a corresponding node or duration consumed exceeds group scheduling timeout duration indicated in attribute information of the workload group object.

S806: The scheduler performs the scheduling operation on the workload group member "Pod".

In this step, the scheduler changes a value of a "nodeName" field of the "Pod" object to a name of a "Node" scheduled for the "Pod" object. In addition, the scheduler updates "Pod" information and "Node" information in the scheduler cache.

S807: The scheduler initiates an update request to the API server, where the update request is for updating data of the "Pod" in the "Etcd".

The scheduler initiates, via the API server, the request for updating the data that is of the "Pod" and that is in the "Etcd". The "Pod" is not bound to the corresponding node until this step. In this way, a resource is allocated to the "Pod".

In this embodiment, the entire group of "Pods" in the workload group queue dequeues according to the dequeue rule of the workload group queue, so that the group scheduling algorithm is invoked to compute corresponding resource nodes for the entire group of "Pods", and the resource is allocated through computation and binding, to improve a success rate of "Pod" deployment, and avoid a complex operation of repeated binding and unbinding.

It should be noted that, after group scheduling deployment is completed, a VNFM may check whether all "Pods" required by the to-be-deployed first VNF can be successfully started. If all the "Pods" required by the first VNF are successfully started, it is determined that instantiation of the first VNF succeeds, and the first VNF is successfully deployed.

According to the group scheduling algorithm provided in the foregoing embodiment, computation needs to be performed on the entire group of "Pods", and consumption of computing resources is greatly increased in comparison with that in a manner in which computation is performed at a granularity of a single "Pod". Therefore, the following describes a method for extending group scheduling that can alleviate computing resource consumption pressure.

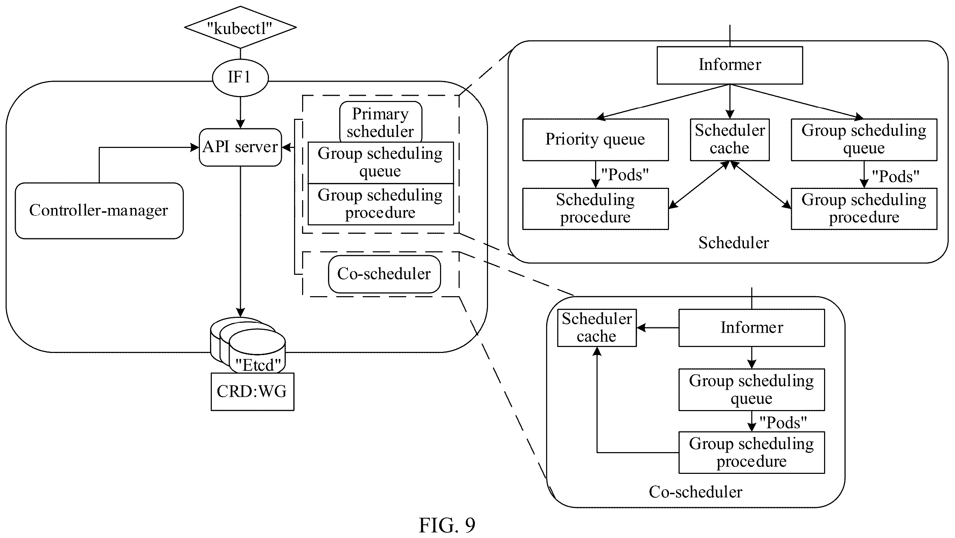

FIG. 9 is a diagram of a framework in which a K8s is extended by a co-scheduler to support group scheduling computation according to an embodiment of this application. As shown in FIG. 9, the K8s is extended by the co-scheduler (Co-Scheduler) based on FIG. 7. The co-schedule is a copy of a primary scheduler that is manually created. Therefore, the co-scheduler also includes a group scheduling queue and a group scheduling procedure.

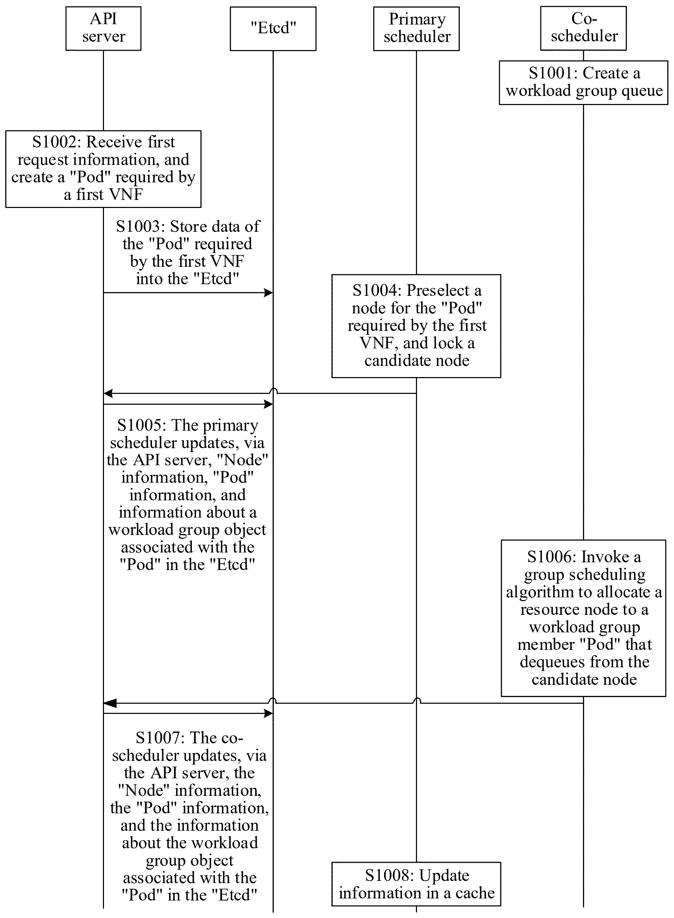

FIG. 10 is a schematic flowchart in which a K8s implements group scheduling via a primary scheduler and a co-scheduler according to an embodiment of this application. With reference to FIG. 10, the following describes a specific procedure of implementing group scheduling in a K8s architecture including the co-scheduler in FIG. 9. As shown in FIG. 10, a group scheduling procedure implemented via the primary scheduler and the co-scheduler may include S1001 to S1008.

S1001: The co-scheduler creates a workload group queue.

Before group scheduling starts, the primary scheduler listens and detects a resource change in an "Etcd" via an informer, and creates a corresponding workload group queue in a group scheduling queue for each workload group object in a workload group object list.

In this embodiment, the co-scheduler is used as a copy of the primary scheduler, and also needs to create a corresponding workload group queue in a group scheduling queue in the co-scheduler for each workload group object in the workload group object list. It should be noted that, there is no sequence relationship when the primary scheduler and the co-scheduler separately create respective workload group queues.

S1002: An API server receives first request information, and creates a "Pod" required by a first VNF.

S1003: The API server stores data of the "Pod" required by the first VNF into the "Etcd".

A procedure of step S1002 and step S1003 is consistent with step S801 and step S802 in the embodiment shown in FIG. 8.

S1004: The primary scheduler preselects a node for the "Pod" required by the first VNF, and locks a candidate node.

In this step, the primary scheduler first adds, according to step S803 and step S804 in the embodiment in FIG. 8, the "Pod" required by the first VNF to an associated workload group queue, and performs dequeuing on the "Pod" in the workload group queue when the "Pod" meets a dequeue rule. Then, according to a pre-selection policy, the primary scheduler filters a node that does not meet the policy from the "Etcd" via the API server, and locks the candidate node in a scheduler cache.

S1005: The primary scheduler updates, via the API server, "Node" information, "Pod" information, and information about a workload group object associated with the "Pod" in the "Etcd".

The primary scheduler marks the candidate node in the "Etcd" with a label of a first workload group object via the API server, to avoid invoking the candidate node by a "Pod" that is not a member of a first workload group, and updates information about the "Pod" that dequeues and preparation scheduling information of the first workload group object in the "Etcd". This helps the co-scheduler subsequently perform a group scheduling operation.

S1006: The co-scheduler invokes a group scheduling algorithm to allocate a resource node to the workload group member "Pod" that dequeues from the candidate node.

The co-scheduler monitors the resource change in the "Etcd" via the informer, and a scheduler cache in the co-scheduler has information about the node with the label of the first workload group object and the information about the "Pod" that dequeues based on the preparation scheduling information of the first workload group object. In the foregoing descriptions, in a process in which the informer monitors a status change in the "Etcd", the API server implements forwarding.

The workload group member "Pod" that dequeues is associated with the first workload group object. The co-scheduler on a node with low computation workload invokes a corresponding group scheduling algorithm according to a group scheduling policy of the first workload group object, and in a range of nodes having the label of the first workload group object, computes a node to which the "Pod" that dequeues is to be scheduled. Group scheduling computation is not completed until each "Pod" in the workload group queue on which dequeuing is performed obtains a corresponding node or duration consumed exceeds group scheduling timeout duration indicated in attribute information of the first workload group object.

After group scheduling computation is completed, the co-scheduler modifies a value of a "nodeName" field of a "Pod" object and updates the "Pod" information and the "Node" information in the scheduler cache in the co-scheduler.

S 1007: The co-scheduler updates, via the API server, the "Node" information, the "Pod" information, and the information about the workload group object associated with the "Pod" in the "Etcd".

In this step, the co-scheduler updates the "Pod" information in the "Etcd" via the API server, binds the "Pod" to the corresponding node, and clears a workload group object identifier of the candidate node. The preparation scheduling information of the first workload group object is updated to scheduled information.

S1008: The primary scheduler updates the information in the cache.

The primary scheduler unlocks the candidate node in the scheduler cache, and clears the workload group object identifier of the candidate node. This step is an optional step for deploying the "Pod" required by the first VNF. A main function of this step is to avoid a deployment failure caused by inability to invoke the candidate node for another workload group object member "Pod". The primary scheduler updates the information in the cache based on the "Pod" information in the "Etcd". Therefore, in this step, it is necessary to implement forwarding by the API server.

In this embodiment, the node with low computation workload is used for dynamically starting/stopping the co-scheduler to complete group scheduling computation of a workload group object with a large quantity of group members, so that a computing resource is used more efficiently, and computing overhead pressure is alleviated.

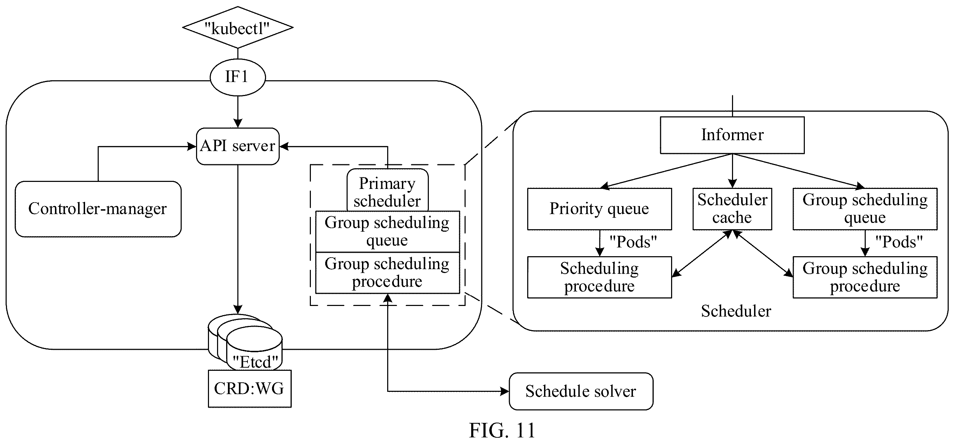

In some implementations, computing overhead pressure of the scheduler may alternatively be alleviated through extension by a schedule solver (Schedule Solver). FIG. 11 is a diagram of a framework in which a K8s is extended by a schedule solver to support group scheduling computation according to an embodiment of this application. The schedule solver is a third-party scheduler independent of a cloud OS.

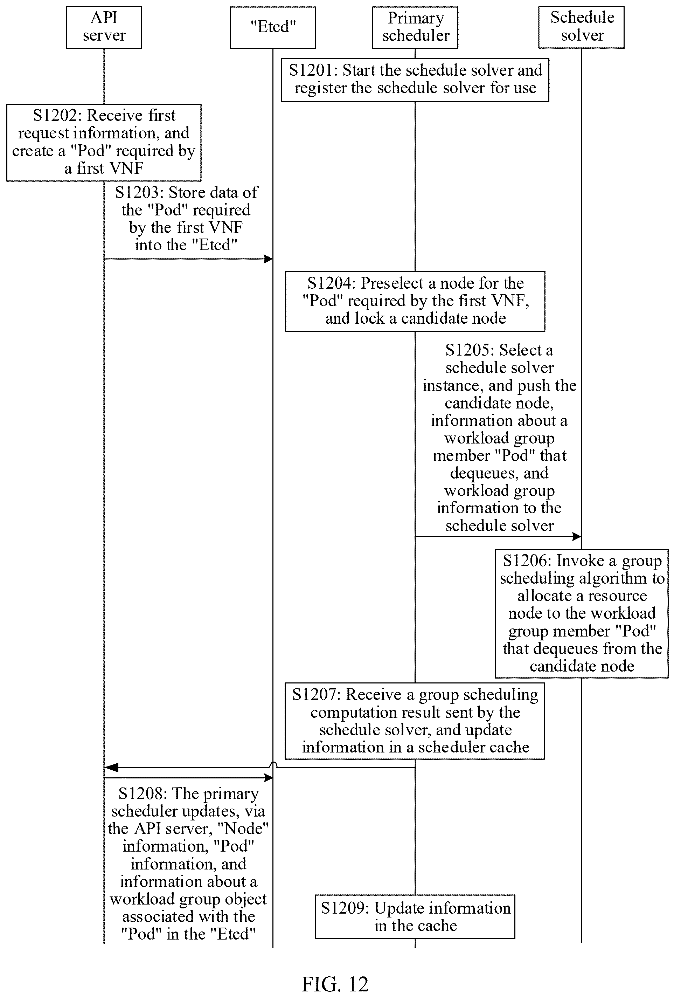

FIG. 12 is a schematic flowchart in which a K8s implements group scheduling via a primary scheduler and a schedule solver according to an embodiment of this application. With reference to FIG. 12, the following describes a specific procedure of implementing group scheduling in a K8s architecture including the schedule solver in FIG. 11. As shown in FIG. 12, a group scheduling procedure implemented via the primary scheduler and the schedule solver may include S1201 to S1208.

S1201: The primary scheduler starts the schedule solver and registers the schedule solver for use.

A plurality of schedule solver instances are deployed on a node with low computing workload in a distributed manner. Because the schedule solver is an independent third-party scheduler, the primary scheduler needs to predetermine, based on information about a quantity of group members of a workload group object, a computing resource consumed for group scheduling, and starts one or more schedule solvers as required.

S1202: An API server receives first request information, and creates a "Pod" required by a first VNF.

S1203: The API server stores data of the "Pod" required by the first VNF into an "Etcd".

S1204: The primary scheduler preselects a node for the "Pod" required by the first VNF, and locks the candidate node.

In the foregoing descriptions, a procedure of step S1202 to step S1204 is consistent with step S1002 to step S1004 in the embodiment shown in FIG. 10.

S1205: The primary scheduler selects a schedule solver instance, and pushes the candidate node, information about a workload group member "Pod" that dequeues, and workload group information to the schedule solver.

In this step, the primary scheduler may select one or more schedule solver instances according to a workload balancing policy, and push the candidate node, the information about the workload group member "Pod" that dequeues, and attribute information of a first workload group object associated with the "Pod" to the selected schedule solver instance. It should be noted that, if the plurality of schedule solver instances are selected, the information that needs to be pushed is sent to the plurality of schedule solver instances in batches, and the plurality of schedule solver instances perform computation in parallel.

S1206: The schedule solver invokes a group scheduling algorithm to allocate a resource node to the workload group member "Pod" that dequeues from the candidate node.

The workload group member "Pod" that dequeues is associated with the first workload group object. The schedule solver invokes the corresponding group scheduling algorithm according to a group scheduling policy of the first workload group object, and in a range of nodes having a label of the first workload group object, computes the node to which the "Pod" that dequeues is to be scheduled. Group scheduling computation is not completed until each "Pod" in the workload group queue on which dequeuing is performed obtains a corresponding node or duration consumed exceeds group scheduling timeout duration indicated in the attribute information of the first workload group object.

S1207: The primary scheduler receives a group scheduling computation result sent by the schedule solver, and updates information in a primary scheduler cache.

In this step, based on the group scheduling computation result, the primary scheduler changes a value of a "nodeName" field of the "Pod" object and updates the "Pod" information and "Node" information in the scheduler cache in the primary scheduler.

S1208: The primary scheduler updates, via the API server, the "Node" information, the "Pod" information, and the information about the workload group object associated with the "Pod" in the "Etcd".

This step is basically the same as S1007 in the embodiment of FIG. 10. A difference lies in that in step S1007, the co-scheduler initiates an update request, and in step S1208, the primary scheduler initiates an update request. S1209: The primary scheduler updates information in the cache.

This step is consistent with S1008 in the embodiment in FIG. 10, and is also an optional step for deploying the "Pod" required by the first VNF. A main function of this step is to avoid a deployment failure caused by inability to invoke the candidate node for another workload group object member "Pod".

In this embodiment, group scheduling computation is implemented via the schedule solver deployed on the node with low computing workload, so that the computing resource can be used more efficiently, and computing overhead pressure can be alleviated.

In the foregoing embodiment, the first request information is for requesting to instantiate the first VNF. In some implementations, the first request information may be further for requesting to scale out a VDU for the first VNF. It should be noted that, when the first request information is for requesting to scale out the VDU for the first VNF, a workload group object identifier that is associated with a scaled-out VDU for the first VNF and that is indicated by first information carried in the first request information is an identifier of the first workload group object. Scaling out the VDU for the first VNF means that a quantity of VDUs that are currently associated as group members of the first workload group object via the label has reached a maximum quantity of group members of the first workload group. Therefore, the first request information further carries second information, and the second information indicates new attribute information of the first workload group object. In the new attribute information of the first workload group object, the maximum quantity of group members of the original first workload group is modified to a maximum quantity of scaled-out group members.

It may be understood that, only a case in which all scaled-out VDUs for the first VNF are started is equivalent to that the first VNF performs successful scaling-out. Therefore, the scaled-out VDU for the first VNF needs to be subsequently deployed on a corresponding resource node. A method for deploying the scaled-out VDU is consistent with the method for deploying the VDU required by the first VNF in the foregoing embodiments. Details are not described herein again.

In the foregoing embodiments, request information received by a VNFM is entered by an administrator on the VNFM. In some implementations, an NFVO may receive the request information entered by the administrator, and the request information is transferred to the VNFM via the NFVO. Correspondingly, a deployment software package and a VNFD of a to-be-deployed VNF are also uploaded on a deployment interface of the NFVO, and a group scheduling check function may also be implemented via the NFVO. For example, in steps S301 in FIG. 3 and FIG. 4, the NFVO may receive a first request, and the first request information is for triggering deployment of a virtual deployment unit VDU for a first virtual network function VNF. The NFVO sends second request information to an infrastructure service manager by using the VNFM as a relay, where the second request information is for requesting to deploy the VDU for the first VNF.

In some implementations, the NFVO may directly interact with the infrastructure service manager. In this case, the VNFM in the foregoing embodiments may be replaced with the NFVO, and a related method performed by the VNFM in the methods in embodiments is performed by the NFVO.

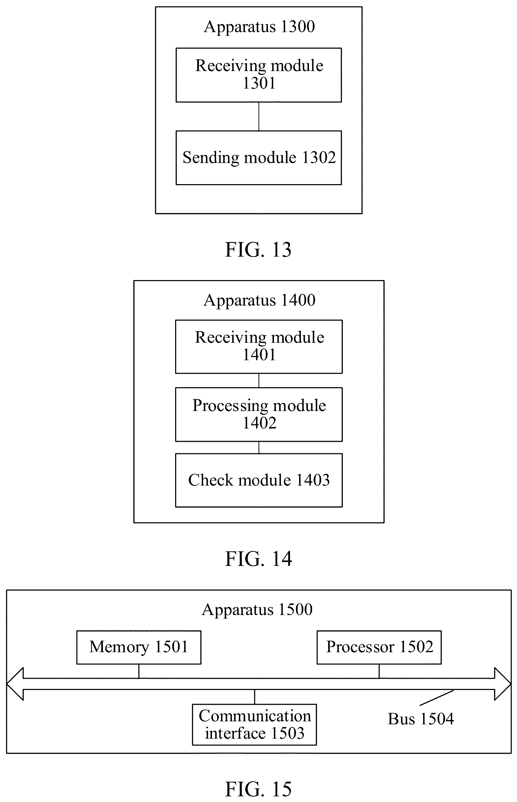

FIG. 13 is a diagram of a structure of a virtual network function deployment apparatus according to an embodiment of this application. With reference to FIG. 13, the following describes the deployment method implemented via the VNFM in embodiments of FIG. 3 to FIG. 5. As shown in FIG. 13, the apparatus 1300 in this embodiment may include a receiving module 1301 and a sending module 1302.

The receiving module 1301 is configured to receive third request information, where the third request information is for triggering deployment of a virtual deployment unit VDU for a first virtual network function VNF.

The sending module 1302 is configured to send first request information to an infrastructure service manager, where the first request information is for requesting to deploy the VDU for the first VNF.

In some implementations, the third request information and the first request information carry first information, the first information indicates that a workload group object identifier associated with the VDU required by the first VNF is a first workload group object identifier, and the workload group object identifier indicates a workload group object.

In some implementations, the sending module 1302 is further configured to send second request information to the infrastructure service manager, where the second request information is for requesting to query a workload group object list.

In some implementations, the receiving module 1301 is further configured to receive fourth request information, where the fourth request information is for querying the workload group object list.

In some implementations, the receiving module 1301 is further configured to receive fifth request information, where the fifth request information is for requesting to create or for requesting to perform update for a workload group object whose workload group object identifier is the first workload group object identifier, and the fifth request information carries second information or third information. The second information includes attribute information that should be included in the workload group object whose workload group object identifier is the first workload group object identifier, and the third information includes attribute information to which attribute information of the workload group object whose workload group object identifier is the first workload group object identifier should be updated.

FIG. 14 is a diagram of a structure of a virtual network function deployment apparatus according to another embodiment of this application. With reference to FIG. 14, the following describes the deployment method implemented via the infrastructure server in embodiments of FIG. 3 to FIG. 5. As shown in FIG. 14, the apparatus 1400 in this embodiment may include a receiving module 1401, a processing module 1402, and a check module 1403.

The receiving module 1401 is configured to receive first request information from a VNFM, where the first request information is for requesting to deploy a VDU for a first VNF.

The processing module 1402 is configured to: create M VDUs for the first VNF, and deploy the M VDUs by using a group scheduling method. The group scheduling method is for reallocating, when there are a plurality of to-be-deployed VDUs, and allocation of a resource to a first VDU in the plurality of VDUs fails, a resource to a second VDU in the plurality of VDUs, where the second VDU includes a VDU that is in the plurality of VDUs and to which a resource has been successfully allocated before the first VDU.

In some implementations, the check module 1403 is configured to create, based on second information, a workload group object whose workload group object identifier is a first workload group object identifier, or update, based on third information, the workload group object whose workload group object identifier is the first workload group object identifier.

In some implementations, the receiving module 1401 is configured to receive second request information from the VNFM, where the second request information is for requesting to query a workload group object list.

In some implementations, the receiving module 1401 is configured to receive fifth request information from the VNFM, and the check module 1403 is configured to create, based on the second information carried in the fifth request information, the workload group object whose workload group object identifier is the first workload group object identifier, or update, based on the third information carried in the fifth request information, the workload group object whose workload group object identifier is the first workload group object identifier.

It should be understood that, the apparatus 1300 and the apparatus 1400 are embodied in a form of a functional module. The term "module" may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another suitable component that supports the described functions.

The apparatus 1300 and the apparatus 1400 have functions of implementing corresponding procedures and/or steps in the foregoing method embodiments. The functions may be implemented by hardware, or may be implemented by hardware by executing corresponding software. The hardware or the software includes one or more modules corresponding to the functions.

FIG. 15 is a diagram of a structure of a virtual network function deployment apparatus according to still another embodiment of this application. The apparatus 1500 shown in FIG. 15 may be configured to perform the method performed by the virtual network function deployment apparatus in any of the foregoing methods. With reference to FIG. 15, the following describes in detail the virtual network function deployment apparatuses in embodiments of FIG. 13 and FIG. 14.

As shown in FIG. 15, the apparatus 1500 in this embodiment includes a memory 1501, a processor 1502, a communication interface 1503, and a bus 1504. The memory 1501, the processor 1502, and the communication interface 1503 implement a communication connection to each other through the bus 1504.

The memory 1501 may be a read-only memory (read-only memory, ROM), a static storage device, a dynamic storage device, or a random access memory (random access memory, RAM). The memory 1501 may store a program. When the program stored in the memory 1501 is executed by the processor 1502, the processor 1502 is configured to perform any one of the foregoing methods.

The processor 1502 may be a general-purpose central processing unit (central processing unit, CPU), a microprocessor, an application-specific integrated circuit, or one or more integrated circuits, and is configured to execute a related program.

Alternatively, the processor 1502 may be an integrated circuit chip, and has a signal processing capability. In an implementation process, related steps in this embodiment of this application may be completed via an integrated logic circuit of hardware in the processor 1502, or instructions in a form of software.

Alternatively, the processor 1502 may be a general-purpose processor, a digital signal processor (digital signal processor, DSP), an application-specific integrated circuit (ASIC), a field programmable gate array (field programmable gate array, FPGA) or another programmable logic device, a discrete gate or a transistor logic device, or a discrete hardware component. The processor may implement or perform the methods, steps, and logical block diagrams that are disclosed in embodiments of this application. The general-purpose processor may be a microprocessor, or the processor may be any conventional processor or the like.

The steps in the methods disclosed with reference to embodiments of this application may be directly performed and completed by a hardware decoding processor, or may be performed and completed by using a combination of hardware in a decoding processor and a software module. The software module may be located in a mature storage medium in the art, such as a random access memory, a flash memory, a read-only memory, a programmable read-only memory, an electrically erasable programmable memory, or a register. The storage medium is located in the memory 1501, and the processor 1502 reads information in the memory 1501 and completes, in combination with the hardware of the processor, functions that need to be performed by units included in the apparatuses in this application.

The communication interface 1503 may use, but is not limited to, a transceiver apparatus, for example, a transceiver, to implement communication between the apparatus 1500 and another device or apparatus.

The bus 1504 may include a channel for transmitting information between various parts (for example, the memory 1501, the processor 1502, and the communication interface 1503) of the apparatus 1500.

An embodiment of this application further provides a computer-readable storage medium. The computer-readable storage medium stores computer instructions. When a processor executes the computer instructions, steps in the methods in the foregoing embodiments are implemented.

An embodiment of this application further provides a computer program product, including computer instructions. When the computer instructions are executed by a processor, steps in the methods in the foregoing embodiments are implemented.

It should be noted that, modules or parts shown in the foregoing embodiments may be one or more integrated circuits configured to implement the foregoing methods, such as one or more application-specific integrated circuits, one or more microprocessors, or one or more field programmable gate arrays. For another example, when the foregoing module is implemented in a form in which a processing element invokes program code, the processing element may be a general-purpose processor, like a central processing unit or another processor, for example, a controller, that may invoke the program code. For still another example, the modules may be integrated together and implemented in a form of a system-on-a-chip (system-on-a-chip, SoC).

All or a part of the foregoing embodiments may be implemented by using software, hardware, firmware, software modules, or any combination thereof. When software is for implementing embodiments, all or a part of embodiments may be implemented in a form of a computer program product. The computer program product includes one or more computer instructions. When the computer program instructions are loaded and executed on a computer, all or a part of procedures or functions according to embodiments of this application are generated. The computer may be a general-purpose computer, a dedicated computer, a computer network, or another programmable apparatus. The computer instructions may be stored in a computer-readable storage medium or may be transmitted from one computer-readable storage medium to another computer-readable storage medium. For example, the computer instructions may be transmitted from a website, a computer, a server, or a data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk drive, or a magnetic tape), an optical medium (for example, a DVD), a semiconductor medium (for example, a solid state disk Solid State Disk (SSD)), or the like.

A person skilled in the art readily figures out another implementation solution of this application after considering this specification and practicing the present invention that is disclosed herein. This application is intended to cover any variations, functions, or adaptive changes of this application. The variations, functions, or adaptive changes comply with general principles of this application, and include common knowledge or a commonly used technical means in the technical field that is not disclosed in this application. The specification and embodiments are merely considered as examples, and the actual scope and the spirit of this application are indicated by the following claims.

It should be understood that, this application is not limited to the precise structure that is described in the foregoing descriptions and that is shown in the accompanying drawings, and various modifications and changes may be made without departing from the scope of this application. The scope of this application is limited only by the appended claims.

## Claims

1. A virtual network function deployment method, applied to an infrastructure service manager, wherein the method comprises:
receiving first request information sent by a virtual network function manager VNFM, wherein the first request information is for requesting to deploy a virtual deployment unit VDU for a first virtual network function VNF;
creating M VDUs for the first VNF, wherein the M VDUs are associated as VDUs in a same group, and M is a positive integer; and
deploying the VDUs in the same group by using a group scheduling method, wherein the group scheduling method is allocating a resource to each of the VDUs in the same group in one computation periodicity, until each of the VDUs in the same group obtains the corresponding resource or allocation of resources to the entire group of the VDUs in the same group fails, and the computation periodicity is for computing the corresponding resource for each of the VDUs in the same group.

2. The method according to claim 1, wherein the first request information carries first information, the first information indicates that a workload group object identifier associated with the VDU required by the first VNF is a first workload group object identifier, the workload group object identifier indicates a workload group object, and the workload group object comprises the following attribute information: a maximum quantity of VDUs that are associable with the workload group object identifier, a scheduling policy when the VDU associated with the workload group object identifier is deployed by using the group scheduling method, a scheduling priority when the VDU associated with the workload group object identifier is deployed by using the group scheduling method, and scheduling timeout duration when the VDU associated with the workload group object identifier is deployed by using the group scheduling method;
creating the M VDUs for the first VNF comprises:
creating the M VDUs, wherein each of the M VDUs is associated with the first workload group object identifier; and
deploying the M VDUs by using the group scheduling method comprises:
deploying, by using the group scheduling method based on the attribute information of the workload group object indicated by the first workload group object identifier, the VDU associated with the first workload group object identifier.

3. The method according to claim 2, wherein deploying, by using the group scheduling method based on the attribute information of the workload group object indicated by the first workload group object identifier, the VDU associated with the first workload group object identifier comprises:
obtaining a VDU that is not deployed;
when a workload group object identifier associated with the VDU that is not deployed is the first workload group object identifier, adding the VDU that is not deployed to an obtained scheduling queue associated with the first workload group object identifier; and
deploying the VDU in the scheduling queue by using the group scheduling method based on the attribute information of the workload group object indicated by the first workload group object identifier.

4. The method according to claim 3, wherein deploying, by using the group scheduling method, the VDU in the scheduling queue based on the attribute information of the workload group object indicated by the first workload group object identifier comprises:
when a quantity of VDUs in the scheduling queue is equal to the maximum quantity of the workload group object indicated by the first workload group object identifier, deploying, by using the group scheduling method, the VDU in the scheduling queue according to the scheduling policy and the scheduling priority of the workload group object indicated by the first workload group object identifier, until each VDU in the scheduling queue is successfully deployed or deployment duration exceeds the scheduling timeout duration of the workload group object indicated by the first workload group object identifier.

5. The method according to any one of claims 2 to 4, wherein the method further comprises:
receiving second information from the VNFM, wherein the second information indicates to create a workload group object whose identifier is the first workload group object identifier.

6. The method according to claim 5, wherein the method further comprises:
sending a workload group object list to the VNFM; and
receiving the second information from the VNFM comprises:
when the workload group object list does not comprise the workload group object whose identifier is the first workload group object identifier, receiving the second information from the VNFM.

7. The method according to any one of claims 2 to 6, wherein the method further comprises:
receiving third information from the VNFM, wherein the third information indicates to update the attribute information of the workload group object whose identifier is the first workload group object identifier.

8. The method according to claim 7, wherein the method further comprises:
sending the workload group object list to the VNFM; and
receiving the third information from the VNFM comprises:
when the workload group object list comprises the workload group object whose identifier is the first workload group object identifier, receiving the third information from the VNFM.

9. The method according to claim 6 or 8, wherein before sending the workload group object list to the VNFM, the method further comprises:
receiving second request information from the VNFM, wherein the second request information is for requesting to query the workload group object list.

10. The method according to claim 3, wherein deploying the VDU in the scheduling queue by using the group scheduling method based on the attribute information of the workload group object indicated by the first workload group object identifier comprises:
associating a group scheduling label with a first node via a first scheduler, wherein the first node comprises a candidate deployment node of the VDU in the scheduling queue, and the first scheduler is configured to allocate a resource to the VDU; and
deploying the VDU in the scheduling queue via a second scheduler by using the group scheduling method based on the attribute information of the workload group object indicated by the first workload group object identifier, wherein the second scheduler is a copy of the first scheduler.

11. The method according to claim 10, wherein deploying the VDU in the scheduling queue by using the group scheduling method based on the attribute information of the workload group object indicated by the first workload group object identifier comprises:
associating the group scheduling label with the first node via the first scheduler, wherein the first node comprises the candidate deployment node of the VDU in the scheduling queue, and the first scheduler is configured to allocate the resource to the VDU; and
deploying the VDU in the scheduling queue via at least one schedule solver by using the group scheduling method based on the attribute information of the workload group object indicated by the first workload group object identifier, wherein the schedule solver is an independent third-party scheduler.

12. A virtual network function deployment method, applied to a virtual network function manager VNFM, wherein the method comprises:
receiving third request information, wherein the third request information is for triggering deployment of a virtual deployment unit VDU for a first virtual network function VNF; and
sending first request information to an infrastructure service manager, wherein the first request information is for requesting to deploy the VDU for the first VNF.

13. The method according to claim 12, wherein the third request information and the first request information carry first information, the first information indicates that a workload group object identifier associated with the VDU required by the first VNF is a first workload group object identifier, the workload group object identifier indicates a workload group object, and the workload group object comprises the following attribute information: a maximum quantity of VDUs that are associable with the workload group object identifier, a scheduling policy when the VDU associated with the workload group object identifier is deployed by using a group scheduling method, a scheduling priority when the VDU associated with the workload group object identifier is deployed by using the group scheduling method, and scheduling timeout duration when the VDU associated with the workload group object identifier is deployed by using the group scheduling method.

14. The method according to claim 13, wherein the method further comprises:
sending second information to the infrastructure service manager, wherein the second information indicates to create a workload group object whose identifier is the first workload group object identifier.

15. The method according to claim 14, wherein the method further comprises:
receiving a workload group object list from the infrastructure service manager; and
sending the second information to the infrastructure service manager comprises:
when the workload group object list does not comprise the workload group object whose identifier is the first workload group object identifier, sending the second information to the infrastructure service manager.

16. The method according to any one of claims 13 to 15, wherein the method further comprises:
sending third information to the infrastructure service manager, wherein the third information indicates to update the attribute information of the workload group object whose identifier is the first workload group object identifier.

17. The method according to claim 16, wherein the method further comprises:
receiving the workload group object list from the infrastructure service manager; and
sending the third information to the infrastructure service manager comprises:
when the workload group object list comprises the workload group object whose identifier is the first workload group object identifier, sending the third information to the infrastructure service manager.

18. The method according to claim 15 or 17, wherein before receiving the workload group object list from the infrastructure service manager, the method further comprises:
sending second request information to the infrastructure service manager, wherein the second request information is for requesting to query the workload group object list.

19. The method according to any one of claims 12 to 18, wherein the third request information is specifically for requesting to instantiate the first VNF; or the third request information is specifically for requesting to scale out the VDU for the first VNF.

20. The method according to any one of claims 12 to 19, wherein the third request information is entered by an administrator on the VNFM; or the third request information is received from a network functions virtualization orchestrator NFVO.

21. A virtual network function deployment apparatus, wherein the apparatus comprises a functional module configured to implement the virtual network function deployment method according to any one of claims 1 to 11, or comprises a functional module configured to implement the virtual network function deployment method according to any one of claims 12 to 19.

22. A virtual network function deployment system, comprising a first deployment apparatus and a second deployment apparatus, wherein the first deployment apparatus is configured to perform the virtual network function deployment method according to any one of claims 1 to 11, and the second deployment apparatus is configured to perform the virtual network function deployment method according to any one of claims 12 to 19.

23. A computer-readable storage medium, wherein the computer-readable storage medium stores computer-executable instructions; and when the computer-executable instructions are executed by a processor, the computer-executable instructions are for implementing the virtual network function deployment method according to any one of claims 1 to 11 or according to any one of claims 12 to 19.

24. A computer program product, comprising a computer program, wherein when the computer program is executed by a processor, the virtual network function deployment method according to any one of claims 1 to 11 or according to any one of claims 12 to 19 is implemented.
